# FASCICULE DE BREVET EUROPEEN

(11) **EP 3 412 350 B1**
(45) Date de publication et mention de la délivrance du brevet: **29.04.2020**
(21) Numéro de dépôt: 18174392.3
(22) Date de dépôt: 25.05.2018
(51) Int. Cl.: A63G 9/12, F16G 11/14

(54) **ENSEMBLE COMPORTANT UNE CORDE DE SUSPENSION D'UN AGRÈS SOUS UN PORTIQUE ET UN DISPOSITIF DE RÉGLAGE DE LA LONGUEUR DE LA CORDE, ET DISPOSITIF DE RÉGLAGE**
ANORDNUNG, DIE EIN AUFHÄNGUNGSSEIL EINER SCHLEPPVORRICHTUNG UNTER EINEM PORTALKRAN UND EINE REGULIERVORRICHTUNG DER LÄNGE DES SEILS UMFASST, SOWIE REGULIERVORRICHTUNG
ASSEMBLY COMPRISING A SUSPENSION CORD FOR HANGING A TACKLE UNDER A GANTRY AND A DEVICE FOR ADJUSTING THE LENGTH OF THE CORD, AND ADJUSTING DEVICE

(30) Priorité: 07.06.2017 FR 1755044
(43) Date de publication de la demande: 12.12.2018
(73) Titulaire: Trigano Jardin, 75019 Paris (FR)
(72) Inventeur: SEDAINE, Nicolas, 72500 Vaas (FR); LAPEYRE, Frédéric, 41100 Vendôme (FR); GAUTHIER, Sylvain, 41310 Saint Amand Longpré (FR)
(74) Mandataire: Gevers & Orès

(56) Documents cités:
- FR-A1- 2 835 195
- FR-A1- 2 971 315
- US-A- 3 139 863
- US-A- 3 289 259
- US-A- 3 870 357

## Description

### DOMAINE TECHNIQUE DE L'INVENTION

L'invention concerne un ensemble comportant une corde de suspension d'un agrès sous un portique, et un dispositif de réglage de la longueur de la corde.

La présente invention concerne aussi un dispositif de réglage de la longueur d'une corde, notamment pour une corde de suspension d'un agrès sous un portique.

### ARRIERE PLAN TECHNIQUE DE L'INVENTION

Certains agrès, tels que les balançoires, les escarpolettes, les anneaux ou les trapèzes, sont suspendus à un portique par l'intermédiaire d'au moins une corde.

Afin de pouvoir régler la longueur du brin de suspension de la corde, il est connu de disposer une boucle de réglage sur la corde. La boucle de réglage est traversée par la corde de manière qu'un brin d'extrémité libre de la corde soit bloqué par un nœud réalisé avec un brin de suspension de la corde.

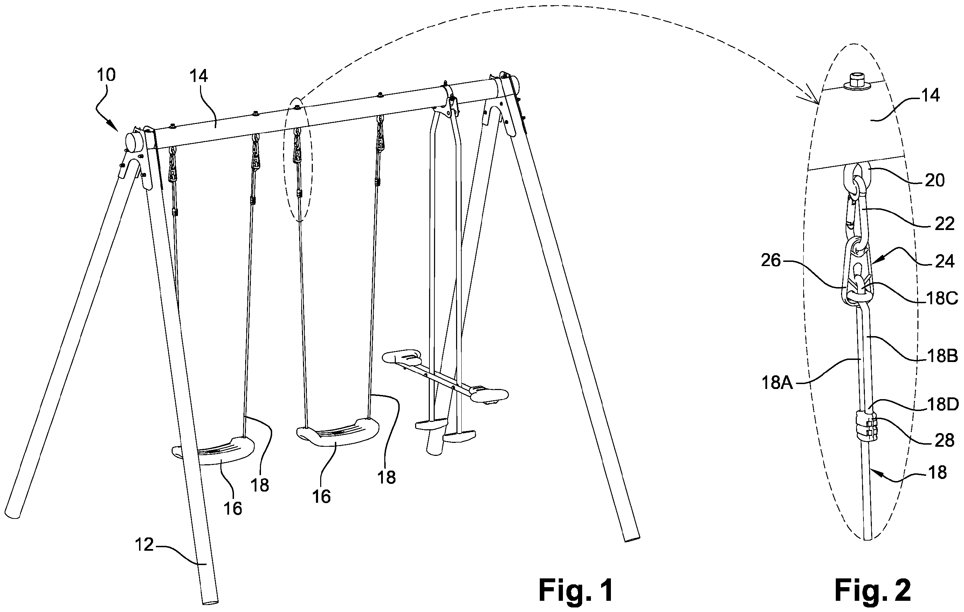

Un exemple d'un portique et de tels moyens de réglage selon l'état de la technique est illustré aux figures 1 et 2 en annexe.

On a représenté à la figure 1 un portique 10 qui comporte des pieds 12 qui portent une traverse 14 supérieure. Divers agrès sont suspendus à la traverse 14, notamment des balançoires 16. Chaque balançoire 16 comporte une assise transversale qui est suspendue par deux cordes 18.

A cet effet, l'extrémité inférieure de chacune des deux cordes 18 est attachée à une des extrémités transversales associée de l'assise. Les deux cordes 18 d'une balançoire 16 présentent des structures identiques et elles sont suspendues de manière identique à la traverse 14.

Comme représenté plus en détail à la figure 2, à titre d'exemple, un anneau de suspension est fixé sous la traverse 14 et un mousqueton 22 est accroché dans l'anneau de suspension 20.

La corde 18 est suspendue au mousqueton 22 par l'intermédiaire d'une plaquette de suspension 24 qui s'étend globalement dans un plan vertical. L'extrémité supérieure de la plaquette de suspension 24 est munie d'un orifice 26 qui permet de suspendre la plaquette de suspension 24 en l'accrochant au mousqueton 22.

L'assise de la balançoire 16 est ainsi suspendue à l'anneau de suspension 20 par l'intermédiaire de la plaquette de suspension 24 et par l'intermédiaire du mousqueton 22.

L'extrémité inférieure de la plaquette de suspension 24 forme une boucle de réglage 26 dans laquelle la partie supérieure de la corde 18 est nouée. A cet effet, la plaquette de suspension 24 comporte ici trois orifices, dans lesquels la corde 18 est passée.

La corde 18 comporte ainsi un premier brin de suspension 18A qui s'étend depuis l'assise jusqu'à la boucle de réglage 26, et un deuxième brin de réglage 18B d'extrémité libre qui s'étend verticalement vers le bas depuis la boucle de réglage 26 le long du brin de suspension 18A. Le brin de suspension 18A est lesté par l'assise et est ainsi sous tension. Dans une telle conception, le brin de réglage 18B est lâche.

Il est possible de régler la longueur du brin de suspension 18A en relâchant le nœud formé par le tronçon supérieur 18C-qui relie entre eux les deux brins 18A et 18Bde la corde 18 - qui traverse la boucle de réglage 26 et en faisant coulisser la corde 18, dans un sens ou dans l'autre, à travers les trois orifices de la boucle de réglage 26. Ceci provoque une variation de la longueur du brin de réglage 18B qui forme ainsi une réserve de corde qui permet de régler la longueur du brin de suspension 18A.

Conformément à la norme applicable (EN71-8, la corde 18 est encore équipée d'un dispositif 28 d'attache qui permet d'éviter le balancement et la tendance à s'effilocher du brin de réglage 18B.

Le dispositif 28 d'attache comporte un embout qui est susceptible d'être fixé au tronçon d'extrémité libre 18D du brin de réglage 18B et des moyens pour attacher l'embout sur le brin de suspension 18A de manière que l'embout puisse coulisser librement le long du brin de suspension 18A. Le dispositif d'attache permet d'éviter le balancement du brin de réglage 18B tout en permettant un réglage de la longueur du brin de suspension 18A.

Ainsi, dans une telle conception, ainsi que dans toutes les autres conceptions connues, les moyens de réglage proprement dits et les moyens de maintien du brin flottant sont toujours des moyens distincts et chaque opération de réglage de la longueur d'une corde nécessite une action sur les moyens de réglage et une action sur les moyens de maintien du brin libre.

De plus le blocage en position réglée de la corde est assuré par le nœud passant dans les trois orifices de la boucle de réglage, ce qui a pour conséquence de rendre l'opération difficile car il faut pouvoir desserrer le nœud existant puis faire coulisser la corde à travers les trois orifices.

Dans un autre domaine technique d'utilisation de cordages nécessitant leur réglage et/ou leur serrage, qui est illustré par le document US-3.289.259, il a été proposé de faire appel à un boîtier de blocage de la corde et à une bride de blocage en position réglée de la corde. Mais dans la conception proposée dans ce document, une fois la bride assemblée dans le boîtier, il est impossible d'effectuer un réglage à nouveau de la longueur sans avoir à désolidariser la bride du boîtier.

L'invention vise à proposer une nouvelle conception des moyens de réglage qui soit de conception plus simple et dont la mise en œuvre réduise et simplifie les opérations.

### BREF RESUME DE L'INVENTION

Dans ce but, l'invention propose un ensemble comportant une corde de suspension d'un agrès sous un portique, et un dispositif, de réglage de la longueur de la corde dans lequel le dispositif comporte :
- un boîtier de réglage comportant au moins une surface de coincement d'un tronçon de la corde s'étendant globalement verticalement à travers le boîtier de réglage ; et
- une bride de blocage :
   -- qui est fixée à une extrémité libre de la corde ; et
   -- qui, en position assemblée dans le boîtier de réglage, est montée mobile par rapport au boîtier de réglage entre :
      i) une position de réglage de la position du boîtier de réglage le long de la corde ; et
      ii) une position de blocage dans laquelle la bride de blocage serre un tronçon de la corde contre la surface de coincement.

Ainsi, l'extrémité libre de la corde équipée de la bride de blocage permet à la fois d'assurer les fonctions de réglage de la longueur de suspension, et le blocage en position réglée

Selon d'autres caractéristiques de l'ensemble :
- en position assemblée dans le boîtier de réglage, la bride de blocage est montée pivotante par rapport au boîtier de réglage, entre ses positions angulaires de réglage et de blocage, autour d'un axe transversal orthogonal à un plan vertical dans lequel la corde s'étend à travers le boîtier ;
- la bride de blocage est assemblée de manière démontable par rapport au boîtier ;
- le boîtier de réglage est ouvert longitudinalement de manière à permettre le montage et/ou le démontage de la bride de blocage dans le boîtier de réglage :
- par passage à travers le boîtier de réglage selon une direction longitudinale globalement orthogonale à la direction générale d'extension du tronçon de la corde à travers le boîtier de réglage ;
- puis par emboîtement longitudinal d'une partie du boîtier de réglage, ou de la bride de blocage, dans un logement complémentaire de la bride de blocage, ou du boîtier de réglage respectivement ;
- le boîtier de réglage comporte une première surface de coincement et une deuxième surface de coincement verticalement espacées l'une de l'autre, et en ce que la bride de blocage comporte :
   -- une première surface de serrage qui s'étend en regard de la première surface de coincement pour serrer un premier tronçon de la corde ; et
   -- une deuxième surface de serrage qui s'étend en regard de la deuxième surface de coincement pour serrer un deuxième tronçon de la corde ;
- la première surface de serrage et la deuxième surface de serrage sont agencées de part et d'autre de l'axe de pivotement de la bride de blocage ;
- la bride de blocage comporte un corps qui délimite un logement dans lequel est reçu un tronçon d'extrémité libre de la corde ;

L'invention propose aussi un dispositif de réglage de la longueur d'une corde de suspension d'un agrès sous un portique, qui comporte :
- un boîtier de réglage comportant au moins une surface de coincement d'un tronçon d'une corde s'étendant globalement verticalement à travers le boîtier de réglage ; et
- une bride de blocage :
   -- qui comporte des moyens pour sa fixation à une extrémité libre de la corde ;
   -- et qui, en position assemblée dans le boîtier de réglage, est montée mobile par rapport au boîtier de réglage entre :
      i) une position de réglage de la position du boîtier de réglage le long de la corde ; et
      ii) une position de blocage dans laquelle la bride de blocage serre un tronçon de la corde contre la surface de coincement.

### BREVE DESCRIPTION DES FIGURES

D'autres caractéristiques et avantages apparaîtront au cours de la lecture de la description détaillée qui va suivre pour la compréhension de laquelle on se reportera aux dessins annexés parmi lesquels :
- la figure 1 est une vue d'ensemble d'un portique équipé de divers agrès dont au moins une balançoire qui est équipée de moyens d'attache et de réglage selon l'état de la technique ;
- la figure 2 est une vue de détail à plus grande échelle des moyens d'attache et de réglage de l'une des deux cordes d'une des balançoires montées sur le portique de la figure 1 ;
- la figure 3 est une vue de détail en perspective analogue à celle de la figure 2 qui représente un ensemble comportant une corde de suspension équipée de son dispositif de réglage selon l'invention qui est illustré en position de serrage et de blocage de la corde de réglage ;
- la figure 4 est une vue de détail à plus grande échelle du dispositif de réglage de la figure 3 ;
- la figure 5 est vue longitudinale avant du dispositif de réglage de la figure 4 ;
- la figure 6 est une vue latérale de gauche du dispositif de réglage de la figure 4 ;

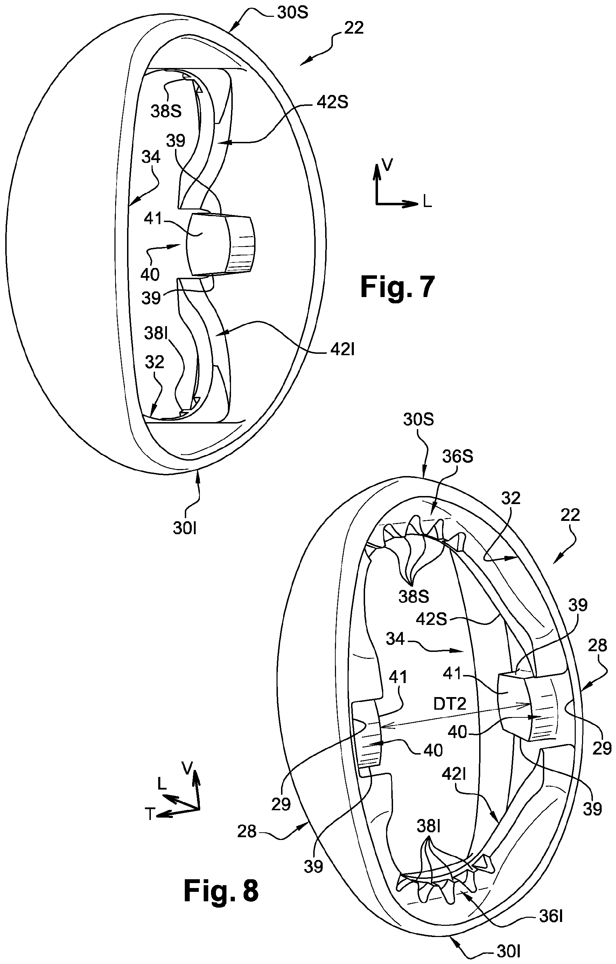

- les figures 7 et 8 sont deux vues en perspective, selon deux angles différents, du boîtier de réglage du dispositif de réglage de la figure 4 ;

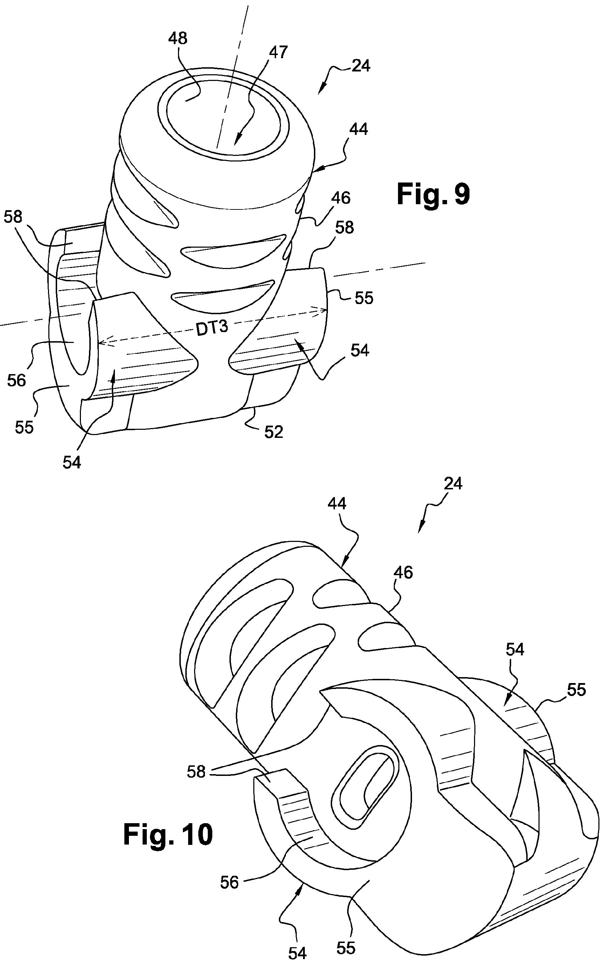

- les figures 9 et 10 sont deux vues en perspective, selon deux angles différents, de la bride de blocage du dispositif de réglage de la figure 4 ;
- la figure 11 est une vue en coupe par le plan vertical et longitudinal 11-11 de la figure 5 ;
- la figure 12 est une vue en coupe par le plan vertical et longitudinal 12-12 de la figure 5 ;
- les figures 13A à 13D sont des schémas qui illustrent différentes étapes de l'assemblage de la bride de blocage dans le boîtier de réglage.

### DESCRIPTION DETAILLEE DES FIGURES

Dans la suite de la description, des éléments présentant des fonctions identiques, analogues ou similaires seront désignés par des mêmes numéros de référence. Pour la suite de la description, on adoptera à titre non limitatif des orientations longitudinale, verticale et transversale indiquées par le trièdre " L, V, T " des figures. L'axe longitudinal L s'étend d'arrière en avant et l'axe transversal T s'étend de droite à gauche.

L'orientation verticale V indiquée sur les figures et utilisée par la suite correspond globalement à l'orientation de la gravité terrestre et à l'orientation du dispositif de réglage lorsque, avec sa corde associée, il est installé par exemple sous un portique pour la suspension d'un agrès.

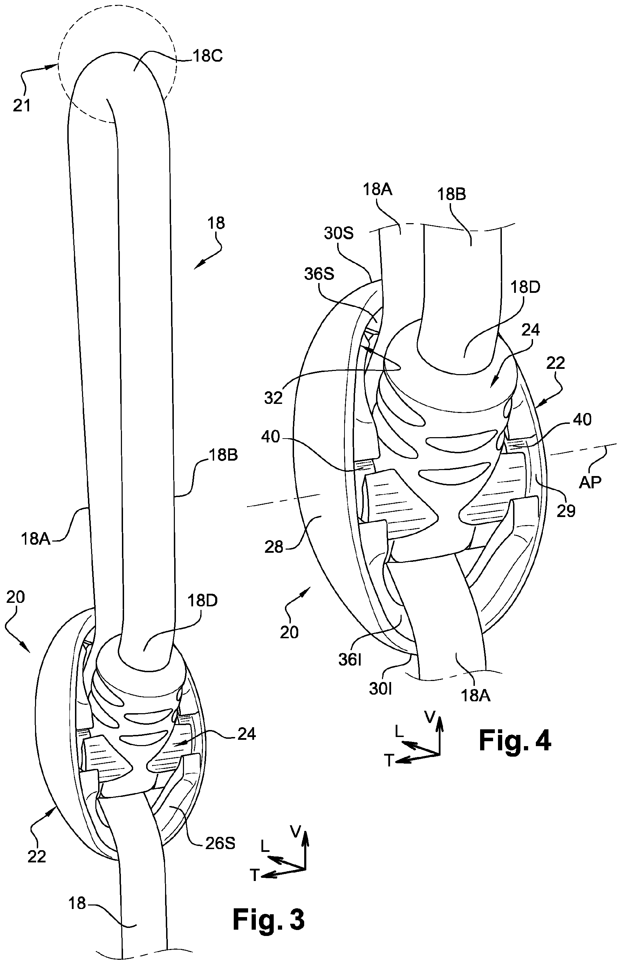

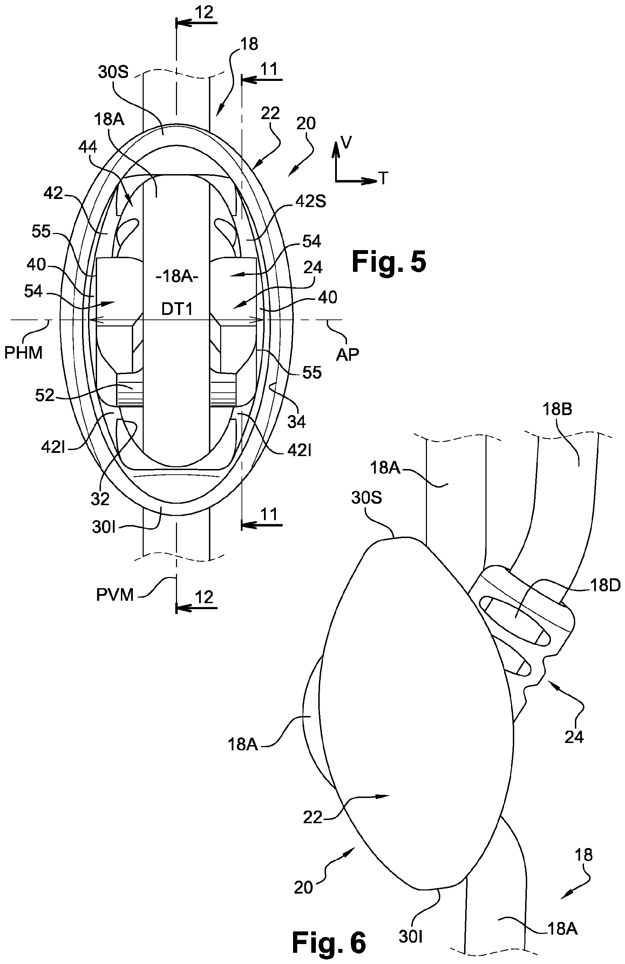

Dans l'exemple de réalisation de l'invention illustré aux figures 3 et suivantes, le boîtier de réglage et la bride de blocage présentent une symétrie de conception par rapport au plan vertical et longitudinal médian PVM indiqué à la figure 5.

Le boitier de réglage présente aussi une symétrie de conception par rapport à un plan longitudinal et horizontal médian PHM indiqué à la figure 5.

Le dispositif de réglage 20 selon l'invention associé à la corde 18 comporte un boitier de réglage 22 et une bride de blocage 24 dont chacune est par exemple réalisée par moulage en une seule pièce en matière plastique. Sans sortir du cadre de l'invention tous autres matériaux adaptés ou processus de fabrication peuvent être utilisés.

Le boîtier de réglage 22 comporte deux parois latérales verticales transversalement opposées 28 dont chacune est ici, à titre non limitatif, de contour globalement ovale.

Les deux parois latérales 28 sont reliées entre elles, à leurs extrémités supérieure et inférieure par une portion transversale de liaison supérieure 30S et inférieure 30I respectivement.

Le boîtier de réglage 22 est ouvert longitudinalement de part et d'autre et il délimité ainsi une face avant ouverte 32 et une face arrière ouverte 34, chacune ici, à titre non limitatif, de contour globalement elliptique.

Du côté de la face avant ouverte 32 du boîtier de réglage 22, la portion inférieure de liaison 30I comporte première surface inférieure 36I de coincement comportant ici une série de quatre dents 38I d'orientation longitudinale. Selon des variantes non représentées, le nombre de dents peut être différent.

Du côté de la face avant ouverte 32 du boîtier de réglage 22, la portion supérieure de liaison 30S comporte deuxième surface supérieure 36S de coincement comportant une série de quatre dents 38S d'orientation longitudinale.

Au voisinage de la face avant ouverte 32 du boîtier de réglage 22, la face interne 29 de chaque paroi latérale 28 comporte un pivot 40 qui s'étend transversalement vers l'intérieur.

Chaque pivot 40 est de contour cylindrique avec deux méplats 39 sensiblement parallèles et horizontaux.

Les deux pivots 40 sont alignés horizontalement selon un axe horizontal de pivotement AP et sont agencés à proximité de la face avant ouverte 28.

Verticalement de part et d'autre du pivot 40, la face interne 29 de chaque paroi latérale 28 comporte une came interne supérieure de guidage 42S et une came interne inférieure de guidage 42I qui se terminent chacune au voisinage du pivot 40.

Au voisinage des pivots 40, les faces internes 29 sont globalement parallèles entre elles et sont séparées d'une distance transversale DT1, tandis que les faces internes d'extrémité 41 des pivots 40 sont espacées d'une distance transversale DT2 inférieure à DT1.

La bride de blocage 24 comporte un corps cylindrique allongé creux 44 d'axe général AA qui est délimité par une surface latérale cylindrique convexe 46 et par une surface latérale interne concave 48.

Le corps creux 44 est ouvert et débouche dans la face annulaire ouverte d'extrémité supérieure 50.

Le corps creux 44 comporte ainsi un logement interne 47 qui reçoit le tronçon d'extrémité libre 18D du brin de réglage 18B de la corde 18.

La bride de blocage 24 est fixée au tronçon d'extrémité libre 18D du brin de réglage 18B dont il est solidaire.

A titre d'exemple non limitatif, cette fixation est par exemple réalisée par surmoulage du corps 44 de la bride de blocage 24 autour du tronçon d'extrémité libre 18D.

A son extrémité inférieure borgne 52, le corps cylindrique 44 de la bride de blocage 24 est délimité par une surface externe semi-cylindrique convexe 53 de contour semi-circulaire et d'axe transversal orthogonal à l'axe AA.

Au voisinage de son extrémité inférieure 52, le corps 44 de la bride de blocage 24 est munie de deux prolongements latéraux transversalement opposés 54.

Les deux prolongements 54 sont alignés et chacun comporte un logement interne cylindrique concave 56 qui débouche axialement vers l'extérieur.

Chaque prolongement comporte aussi une fente radiale 58 à facettes parallèles qui débouche à l'intérieur du logement 56.

Le diamètre interne de chaque logement concave 58 est sensiblement égal au diamètre externe d'un pivot 40 de manière à pouvoir recevoir ce dernier en pivotement.

La distance séparant les deux facettes de chaque fente 58 est légèrement supérieur à la distance séparant deux méplats 39 d'un pivot 40 de manière à permettre l'introduction radiale d'un pivot 40 dans un logement associé 56.

Chaque plot 54 est délimité transversalement par une face annulaire d'extrémité 55 et la distance transversale DT3 séparant les faces d'extrémité 55 est légèrement inférieure à la distance transversale DT1 de manière à permettre le pivotement dans les deux sens de la bride de blocage 24 par rapport au boitier de réglage 22, dans les deux sens autour de l'axe AP.

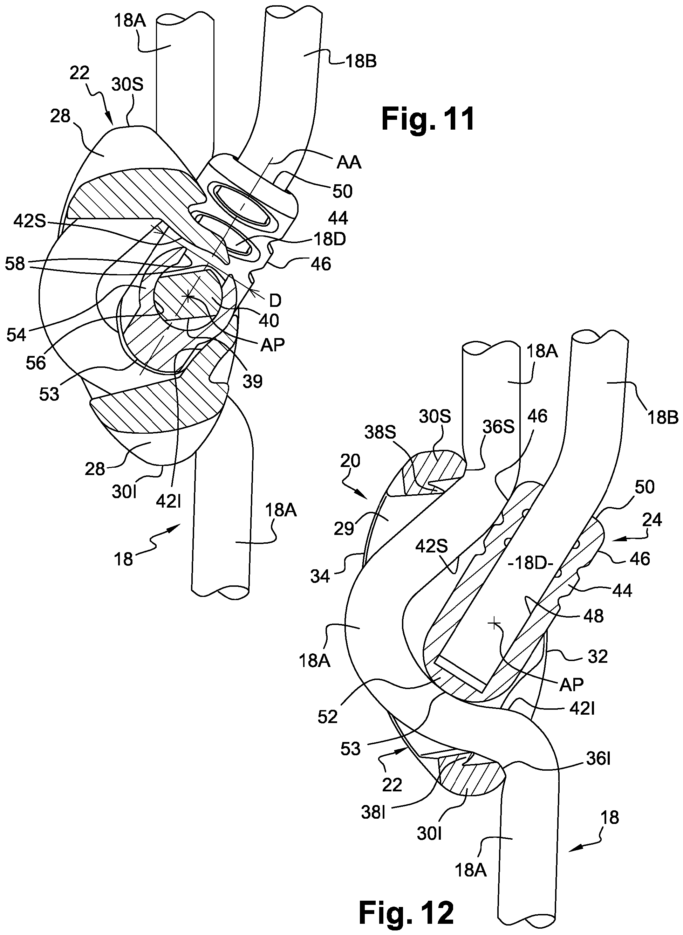

Comme on peut le voir notamment à la figure 11, dans le plan vertical orthogonal à l'axe des logements 56, la plus grande dimension hors-tout de la bride de blocage 24 est égale au diamètre externe D du corps 44 et la valeur du diamètre D est inférieure à la distance transversale DT2 séparant les faces opposées d'extrémité 41 des pivots 40 du boîtier de réglage 22.

Dans la position montée et serrée illustrée notamment aux figures 4,5, 11 et 12, le brin de suspension 18A qui s'étend globalement verticalement à travers le boîtier de réglage 22 est serré et bloqué par rapport au boîtier de réglage 22 et par rapport au brin de réglage 18B en deux points ou zones de coincement.

Un premier tronçon inférieur est coincé, par serrage radial du corps de la corde, entre la surface inférieure de coincement 36I avec ses dents 38I, et une portion en vis-à-vis de la surface cylindrique externe convexe 53 de l'extrémité inférieure 52 du corps 44 de la bride de blocage 24.

Un deuxième tronçon supérieur est coincé, par serrage radial du corps de la corde, entre la surface supérieure de coincement 36S avec ses dents 38S, et une portion en vis-à-vis de la surface cylindrique externe convexe 46 du corps 44 de la bride de blocage 24.

L'effort de serrage contre les deux zones de coincement résulte d'une sollicitation en pivotement, dans le sens antihoraire en considérant la figure 12, de la bride de blocage 24 par rapport au boîtier de réglage 22, autour de l'axe AP.

En suspension, et encore davantage sous charge, cette sollicitation résulte de l'effort exercé verticalement de haut en bas sur le brin de suspension 18A auquel est par exemple accroché le siège de balançoire, qui se traduit par un effort appliqué aux brins 18A et 18B par rapport au boîtier.

Il se produit ainsi un effet d'auto-serrage ou d'auto-blocage sous charge.

Comme on peut aussi le constater à la figure 11, dans cette position réglée d'utilisation et bloquée sous charge, les méplats 39 ne sont pas alignés avec la fente 48, et il n'y a pas de risque d'échappement accidentel des pivots 40 hors des logements 56.

L'accrochage de la corde 18 sous un portique peut par exemple être réalisé au moyen d'un anneau de suspension 21 illustré en silhouette à la figure 3 qui est traversé par le corps de la corde 18 et dans lequel peut être accroché le mousqueton 22 illustré aux figures 1 et 2. L'anneau 21 et le mousqueton peuvent aussi être réalisés en une seule pièce et le mousqueton peut alors être accroché à l'anneau de suspension 20 illustré aux figures 1 et 2.

L'accrochage de la corde 18 peut aussi être réalisé par passage du corps de la corde 18 directement à travers l'anneau de suspension 20 illustré aux figures 1 et 2.

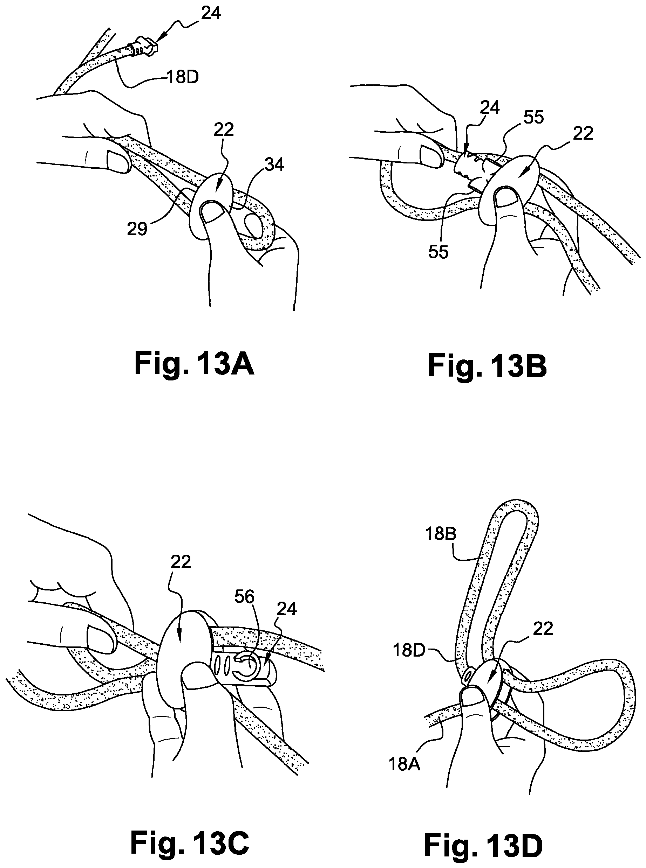

On a représenté schématiquement aux figures 13A à 13D différentes étapes illustrant l'assemblage de la bride de blocage 24 dans le boîtier de réglage 22 et leur utilisation pour faire ensuite un réglage de la longueur de la corde de suspension.

A la figure 13A, la bride de blocage 24 étant fixée au tronçon d'extrémité libre 18D de la corde 18, l'opérateur forme une boucle pliée B avec le corps de la corde qu'il introduit longitudinalement d'arrière en avant à travers le boîtier de réglage 22.

A partir de cet état, comme illustré à la figure 13B, l'opérateur saisit le tronçon d'extrémité libre 18D avec la bride de blocage 24 en orientant le corps 44 avec rotation autour de son axe général AA d'un quart de tour (90 degrés d'angle) par rapport à son orientation finale en position montée et assemblée.

Ainsi, l'opérateur peut faire passer - longitudinalement d'arrière en avant - la bride de blocage 24 à travers le boîtier de réglage 22.

Ce passage est rendu possible du fait que - dans cette position et orientation - la plus grande dimension hors-tout de la bride de blocage 24 est égale au diamètre externe D du corps 44 et la valeur du diamètre D est inférieure à la distance transversale DT2 séparant les faces opposées d'extrémité 41 des pivots 40 du boîtier de réglage 22.

Ensuite, après avoir fait tourner le corps 44 de la bride de blocage 24 autour de son axe général AA d'un quart de tour (90 degrés d'angle), les composants sont dans leur position relative illustrée à la figure 13C.

Dans cette position, les méplats 46 sont alignés avec les fentes 48 et il est ainsi possible d'introduire les pivots 40 dans les logements 58.

Ceci est réalisé par l'opérateur qui exerce une traction longitudinale d'avant en arrière sur le tronçon d'extrémité 18D jusqu'à emboîtement des pivots 40 dans les logements 58.

Il reste ensuite à l'opérateur à faire pivoter la bride de blocage 24 par rapport au boîtier de réglage 22 - autour de l'axe AP - pour aboutir à la position illustrée à la figure 13D dans laquelle il est possible a) de régler la longueur de la corde 18 en faisant coulisser le corps de la corde à travers le boîtier de réglage, dans un sens ou dans l'autre, et/ou b) de serrer et bloquer la corde en position réglée.

Une modification ultérieure du réglage de la longueur de la corde peut, à tout moment, être effectuée en faisant pivoter la bride de blocage 24 par rapport au boîtier de réglage 22 - autour de l'axe AP - sans avoir à démonter ou désolidariser la bride de blocage du boîtier de réglage 22.

Selon un autre mode de réalisation non représenté, le boîtier de réglage peut être réalisé en deux parties ou moitiés séparées selon un plan de joint médian vertical et longitudinal et fixées l'une à l'autre par exemple par un ensemble de vis transversales de fixation.

Dans une telle conception, il n'est pas nécessaire de prévoir des moyens permettant l'introduction longitudinale des pivots dans leurs logements, l'assemblage et la conception étant simplifiés par la conception en deux parties du boîtier de réglage.

Selon encore un autre mode de réalisation non représenté, les pivots 40 peuvent être cylindriques circulaires, c'est-à-dire sans méplats, dans ce cas, les logements présentent en section un contour semi-cylindrique concave prolongé par deux faces planes parallèles et opposées qui s'étendent parallèlement à l'axe AA de la bride de blocage, de façon à permettre l'introduction radiale de chaque pivot dans son logement associé de la bride de blocage.

Selon ce mode de réalisation, les procédures et manipulations de montage et d'assemblage sont identiques à celles décrites précédemment.

## Revendications

1. Dispositif (20) de réglage de la longueur d'une corde (18) de suspension d'un agrès (16) sous un portique, qui comporte :
- un boîtier de réglage (22) comportant au moins une surface (36S, 36I) de coincement d'un tronçon (28I) d'une corde s'étendant globalement verticalement à travers le boîtier de réglage (22) ; et
- une bride de blocage (24) :
-- qui comporte des moyens pour sa fixation à une extrémité libre (18D) de la corde (18) ;
-- et qui, en position assemblée dans le boîtier de réglage (24), est montée mobile par rapport au boîtier de réglage (22) entre :
i) une position de réglage de la position du boîtier de réglage (22) le long de la corde (18I) ; et
ii) une position de blocage dans laquelle la bride de blocage (24) serre un tronçon de la corde contre la surface de coincement (36S, 36I).

2. Ensemble comportant une corde (18) de suspension d'un agrès (16) sous un portique (10), et un dispositif (20) de réglage de la longueur de la corde (28) selon la revendication 1, dans lequel la bride de blocage (24) du dispositif (20) de réglage est fixée à une extrémité libre (18D) de la corde.

3. Ensemble selon la revendication 2, **caractérisé en ce que**, en position assemblée dans le boîtier de réglage (22), la bride de blocage (24) est montée pivotante par rapport au boîtier de réglage (22), entre ses positions de réglage et de blocage, autour d'un axe transversal (AP) orthogonal à un plan vertical (PVM) dans lequel la corde s'étend à travers le boîtier de réglage (22).

4. Ensemble selon la revendication 2, **caractérisé en ce que** la bride de blocage (24) est assemblée de manière démontable par rapport au boîtier de réglage (22).

5. Ensemble selon la revendication 4, **caractérisé en ce que** le boîtier de réglage (22) est ouvert longitudinalement de manière à permettre le montage et/ou le démontage de la bride de blocage (24) dans le boîtier de réglage (22) :
- par passage à travers le boîtier de réglage (22) selon une direction longitudinale globalement orthogonale à la direction générale d'extension du tronçon de la corde (18I) à travers le boîtier de réglage (22) ;
- puis par emboîtement longitudinal d'une partie du boîtier de réglage (22), ou de la bride de blocage (24), dans un logement complémentaire de la bride de blocage (24), ou du boîtier de réglage (22) respectivement.

6. Ensemble selon la revendication 2, **caractérisé en ce que** le boîtier de réglage (22) comporte une première surface de coincement (36S) et une deuxième surface de coincement (36I) verticalement espacées l'une de l'autre, et **en ce que** la bride de blocage (24) comporte :
-- une première surface de serrage (46) qui s'étend en regard de la première surface de coincement (36I) pour serrer un premier tronçon de la corde (18I) ; et
-- une deuxième surface de serrage (53) qui s'étend en regard de la deuxième surface de coincement (36I) pour serrer un deuxième tronçon de la corde (18I).

7. Ensemble selon la revendication 6 prise en combinaison avec la revendication 3, **caractérisé en ce que** la première surface de serrage et la deuxième surface de serrage sont agencées de part et d'autre de l'axe de pivotement de la bride de blocage.

8. Ensemble selon la revendication 2, **caractérisé en ce que** la bride de blocage (24) comporte un corps qui délimite un logement dans lequel est reçu un tronçon d'extrémité libre de la corde.

## Patentansprüche

1. Vorrichtung (20) zum Einstellen der Länge eines Aufhängungsseils (18) einer Schaukelgerät (16) unter einem Schaukelgerüst, die Folgendes beinhaltet:
- ein Einstellgehäuse (22), das mindestens eine Oberfläche (36S, 36I) zum Klemmen eines Teilstücks (28I) eines Seils beinhaltet, das sich im Allgemeinen vertikal durch das Einstellgehäuse (22) erstreckt; und
- einen Blockierungsflansch (24):
-- der Mittel für dessen Befestigung an einem freien Ende (18D) des Seils (18) beinhaltet;
-- und der in zusammengebauter Position in dem Einstellgehäuse (24) in Bezug auf das Einstellgehäuse (22) beweglich montiert ist zwischen:
i. einer Einstellposition der Position des Einstellgehäuses (22) entlang des Seils (18I); und
ii. einer Blockierungsposition, in der der Blockierungsflansch (24) ein Teilstück des Seils gegen die Klemmoberfläche (36S, 36I) presst.

2. Einheit, die ein Aufhängungsseil (18) eines Schaukelgerät (16) unter einem Schaukelgerüst (10) beinhaltet, und eine Einstelvorrichtung (20) der Länge des Seils (28) nach Anspruch 1, wobei der Blockierungsflansch (24) der Einstellvorrichtung (20) an einem freien Ende (18D) des Seils befestigt ist.

3. Einheit nach Anspruch 2, **dadurch gekennzeichnet, dass** in zusammengebauter Position in dem Einstellgehäuse (22) der Blockierungsflansch (24) in Bezug auf das Einstellgehäuse (22) zwischen seiner Einstellposition und seiner Blockierungsposition um eine Querachse (AP), die zu einer vertikalen Ebene (PVM) orthogonal ist, in der sich das Seil durch das Einstellgehäuse (22) erstreckt, schwenkbar montiert ist.

4. Einheit nach Anspruch 2, **dadurch gekennzeichnet, dass** der Blockierungsflansch (24) in Bezug auf das Einstellgehäuse (22) demontierbar zusammengebaut ist.

5. Einheit nach Anspruch 4, **dadurch gekennzeichnet, dass** das Einstellgehäuse (22) längs derart offen ist, um die Montage und/oder die Demontage des Blockierungsflanschs (24) in dem Einstellgehäuse (22) zu erlauben:
- durch Durchgehen durch das Einstellgehäuse (22) entlang einer Längsrichtung, die global zu der allgemeinen Ausdehnungsrichtung des Teilstücks des Seils (18I) durch das Einstellgehäuse (22) orthogonal ist;
- dann durch Längseingreifen eines Teils des Einstellgehäuses (22) oder des Blockierungsflanschs (24) in eine ergänzende Aufnahme jeweils des Blockierungsflanschs (24) oder des Einstellgehäuses (22).

6. Einheit nach Anspruch 2, **dadurch gekennzeichnet, dass** das Einstellgehäuse (22) eine erste Klemmoberfläche (36S) und eine zweite Klemmoberfläche (36I), die vertikal voneinander beabstandet sind, beinhaltet, und dadurch, dass der Blockierungsflansch (24) Folgendes beinhaltet:
-- eine erste Pressoberfläche (46), die sich gegenüber der ersten Klemmoberfläche (36I) erstreckt, um ein erstes Teilstück des Seils (18I) zu pressen; und
-- eine zweite Pressoberfläche (53), die sich gegenüber der zweiten Klemmoberfläche (36I) erstreckt, um ein zweites Teilstück des Seils (18I) zu pressen.

7. Einheit nach Anspruch 6, in Kombination mit Anspruch 3 genommen, **dadurch gekennzeichnet, dass** die erste Pressoberfläche und die zweite Pressoberfläche auf der einen und der anderen Seite der Schwenkachse des Blockierungsflanschs eingerichtet sind.

8. Einheit nach Anspruch 2, **dadurch gekennzeichnet, dass** der Blockierungsflansch (24) einen Körper beinhaltet, der eine Aufnahme abgrenzt, in der ein freies Endteilstück des Seils aufgenommen ist.

## Claims

1. Device (20) for adjusting the length of a suspension cord (18) for hanging a tackle (16) under a gantry, which comprises:
- an adjustment casing (22) comprising at least one surface (36S, 36I) for pinching a segment (28I) of a cord extending generally vertically through the adjustment casing (22); and
- a locking flange (24)
-- which comprises means for the fastening thereof at a free end (18D) of the cord (18);
-- and which, in the assembled position in the adjustment casing (24), is movably mounted in relation to adjustment casing (22) between:
i) a position for adjusting the position of the adjustment casing (22) along the cord (18I); and
ii) a locking position wherein the locking flange (24) clamps a segment of the cord against the pinching surface (36S, 36I).

2. Assembly comprising a suspension cord (18) for hanging a tackle (16) under a gantry (10), and a device (20) for adjusting the length of the cord (28) according to claim 1, wherein the locking flange (24) of the adjusting device (20) is fixed to a free end (18D) of the cord.

3. Assembly according to claim 2, **characterised in that**, in the assembled position in the adjustment casing (22), the locking flange (24) is pivotably mounted with respect to the adjustment casing (22), between its adjusting and locking positions, around a transversal axis (AP) orthogonal to a vertical plane (PVM) in which the cord extends through the adjustment casing (22).

4. Assembly according to claim 2, **characterised in that** the locking flange (24) is assembled in a way that can be disassembled in relation to the adjustment casing (22).

5. Assembly according to claim 4, **characterised in that** the adjustment casing (22) is longitudinally open in such a way as to allow for the assembly and/or the disassembly of the locking flange (24) in the adjustment casing (22):
- by passing through the adjustment casing (22) along a longitudinal direction generally orthogonal to the general direction of extension of the segment of the cord (18I) through the adjustment casing (22);
- then via longitudinal nesting of a portion of the adjustment casing (22), or of the locking flange (24), in a complementary housing of the locking flange (24), or of the adjustment casing (22) respectively.

6. Assembly according to claim 2, **characterised in that** the adjustment casing (22) comprises a first pinching surface (36S) and a second pinching surface (36I) vertically spaced from one another, and **in that** the locking flange (24) comprises:
-- a first clamping surface (46) that extends facing the first pinching surface (36I) in order to clamp a first segment of the cord (18I); and
-- a second clamping surface (53) that extends facing the second pinching surface (36I) in order to clamp a second segment of the cord (18I).

7. Assembly according to claim 6 taken in combination with claim 3, **characterised in that** the first clamping surface and the second clamping surface are arranged on either side of the pivoting axis of the locking flange.

8. Assembly according to claim 2, **characterised in that** the locking flange (24) comprises a body that delimits a housing wherein a free end segment of the cord is received.
